# EUROPÄISCHE PATENTSCHRIFT

(11) **EP 0 629 900 B1**
(45) Veröffentlichungstag und Bekanntmachung des Hinweises auf die Patenterteilung: **22.12.1999**
(21) Anmeldenummer: 93810436.1
(22) Anmeldetag: 17.06.1993
(51) Int. Cl.: G03B 27/58

(54) **Wickelspule für bandförmiges fotografisches Material**
Winding spool for web-like photographic material
Bobine d'enroulement pour matériau photographique en forme de bande

(43) Veröffentlichungstag der Anmeldung: 21.12.1994
(73) Patentinhaber: GRETAG IMAGING AG, CH-8105 Regensdorf (CH)
(72) Erfinder: Ackermann,Rudolf, CH-8967 Widen (CH); Schärer,Hanspeter, CH-8108 Dällikon (CH)
(74) Vertreter: Schwabe - Sandmair - Marx

(56) Entgegenhaltungen:
- EP-A- 0 362 780
- EP-A- 0 463 997
- DE-A- 3 538 082
- US-A- 3 650 389
- US-A- 5 187 531

## Beschreibung

Die Erfindung betrifft eine Wickelspule für bandförmiges fotografisches Material gemäss Oberbegriff des Patantanspruchs 1.

Fotolabors, die belichtete Filmmaterialien bestimmter Typen, üblicherweise Negativfilme des 135-er Formats, in sehr grossen Mengen verarbeiten, geraten zunehmend unter den Druck ihrer Kunden, die ihre Aufträge in immer kürzerer Zeit erledigt haben wollen. Zu diesem Zweck werden die einzelnen Verarbeitungsschritte, vom Eingang des belichteten Filmmaterials und dessen Entwicklung über die Erstellung der gewünschten Anzahl von Abzügen des gewünschten Formats, üblicherweise Papierbilder im Format 3" x 4.5" bis 5" x 7.5", bis hin zur Verpackung der Filmnegative und der Papierbilder, mit Hilfe von verschiedenen Hochgeschwindigkeitsmaschinen durchgeführt und teilweise noch von Hand unterstützt.

Vor allem ein- und ausgangs der einzelnen Verarbeitungsstationen wird das Bedienungspersonal vielfach noch dazu eingesetzt, Film- oder Papierrollen beispielsweise in eine automatische Einfädelvorrichtung einzugeben, oder aufgespulte Film- oder Papierrollen von einer Station zu entnehmen und zur nächsten zu transportieren, um sie dort wiederum einsatzbereit anzuordnen. Das vom Bedienungspersonals geforderte Arbeitstempo ist verhältnismässing hoch und wird weitgehend von den sehr hohen Verarbeitungsgeschwindigkeiten der einzelnen Verarbeitungsstationen bestimmt. Zusätzlich zu dem hohen Arbeitstempo wird von dem Bedienungspersonal grosse Präzision und Genauigkeit gefordert, um eine fehlerhafte Auftragsbearbeitung oder einen unerwünschten Stillstand der einzelnen Verarbeitungsstationen zu vermeiden.

Das Bedienungspersonal muss darauf achten, dass die losen Enden des fotografischen Bandmaterials (Film- bzw. Papierbänder) nicht verschmutzen, da diese Verschmutzungen an die Transportmittel in den einzelnen Bearbeitungsstationen übergeben werden könnten. Es muss darauf geachtet werden, die Arretierung des Wickelkems einer Kassette nicht versehentlich zu lösen und in die falsche Richtung zu drehen, da in diesem Fall das Bandmaterial in die Kassette eingezogen werden kann, und nur schwer wieder hervorgeholt werden kann. Auch muss das Bedienungspersonal darauf achten, dass die Vorderenden nicht geklemmt und beschädigt werden, da dies zu Problemen beim Einfädeln des Bandmaterials führen könnte, was wiederum in unerwünschten Stillstandzeiten der Bearbeitungsstation bzw. der gesamten Verarbeitungsanlage führen könnte.

Bei modernen fotografischen Verarbeitungsanlagen besteht der Trend, das Bedienungspersonal von seiner Schnittstellenfunktion weitgehend zu entlasten. Insbesondere soll das fotografische Bandmaterial, Film- bzw. Papiermaterial, automatisch zwischen den einzelnen Verarbeitungsstationen transportiert werden und in den Verarbeitungsstationen automatisch eingefädelt, abgewickelt und wieder auf Spulen aufgewickelt werden. Dabei besteht das Problem, dass die herkömmlichen Spulen oder Kassetten nicht für ein automatisches Andocken ausgebildet sind. Das fotografische Bandmaterial, Film bzw. Papier, kann nicht automatisch gefasst und in die jeweilige Verarbeitungsstation eingefädelt werden. Bei den meisten Verarbeitungsstationen kann das Bandmaterial ausgangs zwar quasi automatisch auf eine Spule oder in eine Kassette aufgewickelt werden, jedoch liegt es dann wiederum nicht in einer geeigneten Form vor, dass es bei der nächsten Station wieder automatisch angedockt und abgewickelt werden könnte.

Aus EP 0 362 780 ist eine Kassette für fotografisches Bandmaterial bekannt. Diese umfaßt eine Bandführ- und Transporteinrichtung, die im Bereich zwischen dem Papierwickel und einem Durchführschlitz im Kassettengehäuse ortsfest angeordnet ist.

Aus US 5,187,531 ist eine automatische Papierladevorrichtung bekannt. Darin wird ein Papiermagazin offenbart, das eine Fotopapierrolle enthält, wobei am Kassettenauslaß ortsfest ein Papierauslaß vorgesehen ist.

Aus US 3,650,389 ist eine Vorrichtung zum Speichern und Handhaben eines fotografischen Filmes oder dergleichen bekannt. Eine beschriebene Ausführungsform betrifft eine Spule mit einem Filmhaltearm, der einen auf der Spule aufgewickelten Film auf dieser lösbar hält.

Aufgabe der vorliegenden Erfindung ist es daher, den vorstehenden Problemen Abhilfe zu schaffen. Es soll eine Wickelspule für bandförmiges fotografisches Material geschaffen werden, bei der gewährleistet ist, dass das Bandmaterial sich nicht unbeabsichtigt abwickelt, und bei der der Wickelkern nicht unbeabsichtigt verdrehbar ist. Ein Auf- und Abwickelsystem soll es erlauben, das fotografische Bandmaterial automatisch anzudocken, einzufädeln und abzuwickeln. Das fotografische Bandmaterial soll ausgangs der Verarbeitungsstationen derart aufgewickelt und sein Bandende deran bereitgestellt sein, dass nach der Übergabe der Bandmaterialkassette an den Eingang der nachfolgenden Station das Bandmaterial wiederum automatisch gehandhabt werden kann. Auf eine menschliche Schnittstelle zwichen den einzelnen Stationen soll weitgehend verzichtet werden können.

All diese und noch weitere Aufgaben werden durch eine Wickelspule für bandförmiges fotografisches Material gelöst, die die im kennzeichnenden Teil des Patentanspruchs 1 angeführten Merkmale aufweist. Besonders bevorzugte und vorteilhafte Ausführungsvarianten der Erfindung sind Gegenstand der abhängigen Patentansprüche.

Insbesondere wird durch die Erfindung ein Wickelsystem für bandförmiges fotografisches Material geschaffen, bei dem das fotografische Bandmaterial auf einen Wickelkern einer Bandmaterialkassette (Filmspule bzw. -kassette oder Papierkassette) wickelbar ist, die abwickel- oder aufwickelseitig in Bearbeitungsstationen einer fotografischen Verarbeitungsanlage ansteck- bzw. anstellbar ist. Die Bandmaterialkassette ist mit einer Halte- und Klemmvorrichtung für das Ende des fotografischen Bandmaterials ausgestattet, welche wahlweise manuell oder mit Hilfe einer vorzugsweise automatischen Betätigungsvorrichtung derart betätigbar ist, dass das Ende des aufgewickelten fotografischen Bandmaterials gehalten und eingeklemmt bzw. lose vorliegt.

In einer besonders bevorzugten Weiterbildung des Erfindungsgedankens sind die Betätigungsvorrichtungen jeweils an den Abwickel- bzw. Aufwickelvorrichtungen der einzelnen Bearbeitungsstationen vorgesehen und automatisch mit der integrierten Halte- und Klemmvorrichtung der Bandmaterialkassette in Eingriff bringbar, um diese zu öffnen bzw. zu schliessen.

Im folgenden wird die Erfindung mit allen ihr als wesentlich erscheinenden Einzelheiten unter Bezugnahme auf die beispielsweisen Darstellungen näher erläutert. Es zeigen:
- Fig. 1: eine Filmspule mit einer Halte- und Klemmvorrichtung,
- Fig. 2: die Filmspule gemäss Fig. 1 mit ausgeschwenkter Halte- und Klemmvorrichtung,
- Fig. 3: eine teilweise explodierte Darstellung der Filmspule gemäss Fig. 1 und 2,
- Fig. 4: eine Filmspule gemäss Fig. 1-3 mit einer abwickelseitigen Betätigungsvorrichtung,
- Fig. 5: die abwickelseitige Betätigungseinrichtung gemäss Fig. 4 in Eingriff mit der Halte- und Klemmvorrichtung der Filmspule,
- Fig. 6: die abwickelseitige Betätigungseinrichtung aus Fig. 5 mit ausgeschwenkter Halte- und Klemmvorrichtung der Filmspule,
- Fig. 7: eine Filmspule gemäss Fig. 1-3 mit eingeschwenkter Halte- und Klemmvorrichtung und mit einer aufwickelseitigen Betätigungsvorrichtung,
- Fig. 8: die aufwickelseitige Betätigungseinrichtung gemäss Fig. 7 mit ausgeschwenkter Halte- und Klemmvorrichtung der Filmspule und mit eingeschwenkten Führungsarmen, und
- Fig. 9: die aufwickelseitige Betätigungseinrichtung aus Fig. 8 mit ausgeschwenkter Halte- und Klemmvorrichtung der Filmspule und mit zurückgeschwenkten Führungsarmen.

Im folgenden wird die Erfindung am Beispiel einer Filmspule und von Abwickel- und Aufwickeleinrichtungen an entsprechenden Bearbeitungsstationen einer fotografischen Verarbeitungsanlage erläutert. Derartige Abwickeleinrichtungen für Filmspulen sind beispielweise an einem fotografischen Kopiergerät und an einer Schneide- und Verpackungsstation vorgesehen. Die Aufwickeleinrichtungen für die Filmspulen sind ausgangs eines Filmprozessors und am fotografischen Kopiergerät angeordnet. Es versteht sich jedoch, dass die Erfindung in sehr ähnlicher Weise auch bei auf Rollen aufgewickeltem Fotopapier und bei Abwickeleinrichtungen für das Fotopapier am fotografischen Kopiergerät und eingangs der Schneide- und Verpackungsstation und bei Aufwickeleinrichtungen für das Fotopapier ausgangs des Kopiergerätes und ausgangs des Papierprozessors vorgesehen sein kann.

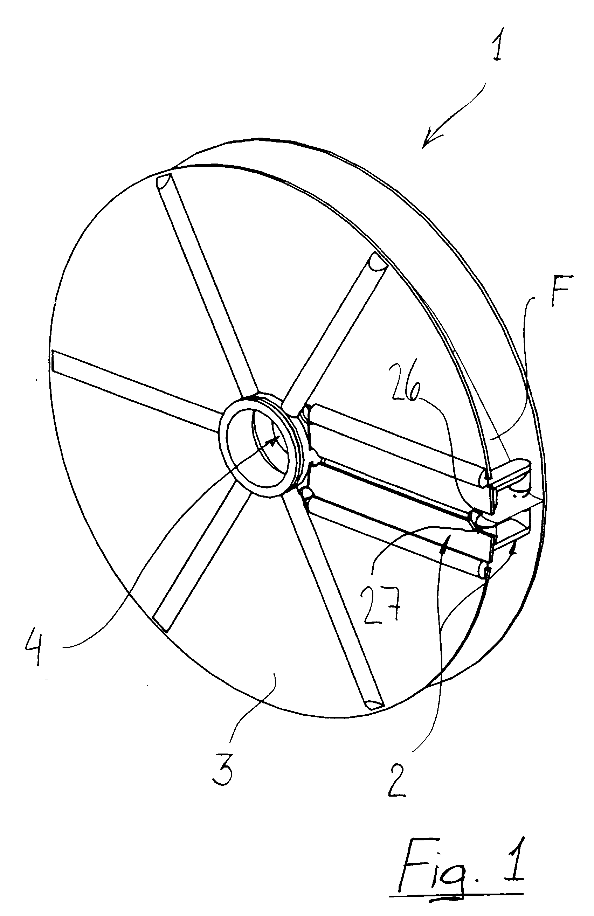

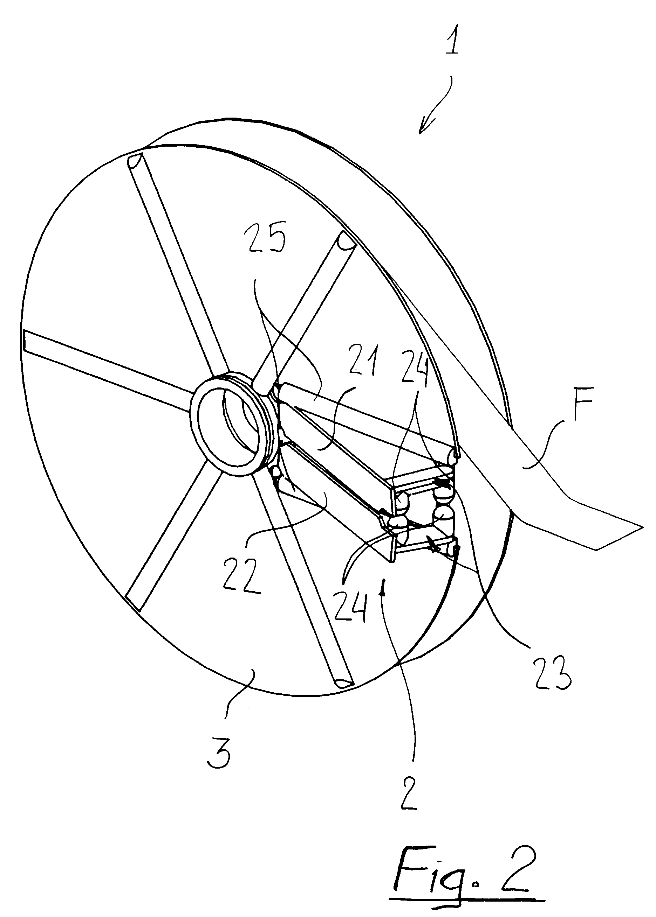

In den Fig. 1-3 ist eine beispielweise Ausführungsform einer Filmspule mit einer erfindungsgemässen Halte- und Klemmvorrichtung, die mit abwickel- und aufwickelseitig an den einzelnen Bearbeitungsstationen der fotografischen Verarbeitungsanlage angeordneten erfindungsgemässen Betätigungsvorrichtungen zusammenwirkt, gesamthaft mit dem Bezugszeichen 1 versehen. Die Filmspule 1 umfasst einen nicht näher bezeichneten Wickelkern, auf den bandförmiges Filmmaterial aufwickelbar bzw. von dem dieses wieder abwickelbar ist. Der Wickelkern weist eine axiale Bohrung 4 auf, welche es erlaubt, die Filmspule 1 auf Wickeldorne in den jeweiligen Aufwickel- bzw. Abwickeleinrichtungen der Bearbeitungsstationen aufzustecken. Der Durchmesser der Bohrung 4 ist üblicherweise genormt und beträgt beispielsweise 25,4 mm (1 Zoll).

Eine Bundscheibe 3 der Filmspule 1 ist mit einer Halte- und Klemmvorrichtung 2 für das lose Ende des Filmmaterialbandes F ausgestattet. Die Halte- und Klemmvorrichtung 2 erstreckt sich etwa vom Wickelkern radial nach aussen. Sie umfasst eine bewegliche Lasche 21,22 mit daran angeordneten Klemmelementen 23,24. Die Lasche 21,22 ist aus einer ersten stabilen Endstellung, in der das Bandmaterialende zwischen den Klemmelementen 23,24 geklemmt und gehalten ist, in eine zweite stabile Lage schwenkbar, in der die Klemmelemente 23,24 ausser Eingriff mit dem Bandmaterialende stehen. Die Klemmelemente 23,24 sind jeweils an den Laschenenden an der Peripherie der Bundscheibe 3 angeordnet und erstrecken sich etwa quer zu der Bundscheibe 3 und zur Oberfläche des Filmmaterials F.

Bei der beispielsweise dargestellten erfindungsgemässen Filmspule 1 ist die Lasche 21,22 zweigeteilt, wobei jedes Laschenteil an seinem Vorderende an der Peripherie der Bundscheibe 3 ein Klemmelement 23,24 aufweist. Die Klemmelemente sind dabei Klemmfinger 24, die an einem etwa vertikal von der Lasche abstehenden und sich quer zur Oberfläche des Filmmaterials erstreckenden Hakenteil 23 ausgebildet sind. Die Klemmfinger 24 des am oberen Laschenteil 21 angebrachten Hakenteils 23 und die des am unteren Laschenteil angebrachten Hakenteils liegen einander genau gegenüber. Es versteht sich, dass anstelle der Hakenteile 23 mit Klemmfingern 24 auch jeweils eine durchgehende Klemmleiste an den Vorderenden der Laschenteile 21,22 vorgesehen sein kann.

An den Vorderenden der Laschenteile 21,22 sind jeweils einander gegenüberliegende Aussparungen 26,27 vorgesehen, die zur Aufnahme einer entsprechenden Einrichtung an der Betätigungsvorrichtung dienen, mit deren Hilfe die Klemmelemente 23,24 auseinanderspreizbar sind.

Vorzugsweise sind die verschwenkbaren Laschenteile 21,22 integral an der Bundscheibe 3 ausgebildet. Zwischen den beiden Laschenteilen 21,22 ist ein schmaler radialer Spalt ausgespart. Ober- und unterhalb der Laschenteile 21,22 sind Klemmwülste 25 vorgesehen, die sich radial vom Wickelkern etwa parallel zur Erstreckung der Laschenteile 21,22 nach aussen erstrecken. Die Klemmwülste 25 dienen zum Zusammenpressen der Laschenteile 21,22 im eingeschwenkten Zustand.

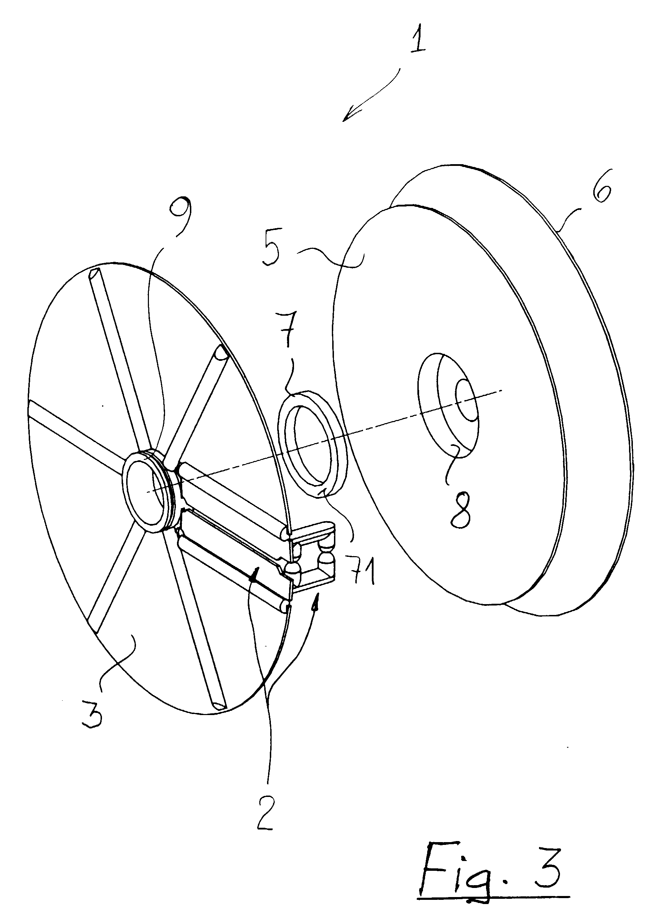

Aus der teilweise explodierten Darstellung in Fig. 3 ist ersichtlich, dass die Halte- und Klemmvorrichtung 2 in einer zusätzlichen Bundscheibe 3 vorgesehen ist. Die Filmspule 1 umfasst somit drei Bundscheiben. Zwei der Bundscheiben 5,6 bilden die seitlichen Begrenzungswände des Wickelkerns. Dabei weist eine 5 der Bundscheiben einen kleineren Durchmesser auf als die zweite 6, die zugleich eine Seitenwand der Filmspule 1 darstellt. Die zweite Seitenwand der Filmspule 1 wird von der zusätzlichen Bundscheibe 3 gebildet, in der die Halte- und Klemmvorrichtung 2 für das freie Filmende integriert ist. Der Durchmesser der zusätzlichen Bundscheibe 3 entspricht dem Durchmesser der Bundscheibe 6, welche die erste Seitenwand der Filmspule bildet.

Die zusätzliche Bundscheibe 3 ist gegenüber der weiter innen liegenden kleineren Bundscheibe drehbar gelagert. Zu diesem Zweck ist an der Seite der kleineren Bundscheibe im Wickelkern eine axiale Vertiefung 8 vorgesehen, welche zur Aufnahme eines Lagerteils 7 dient. Dieses Lagerteil 7 ist zwischen der kleineren Bundscheibe 5 und der zusätzlichen Bundscheibe angeordnet und weist an der der zusätzlichen Bundscheibe 3 zugewandten Seite eine Reibfläche 71 auf. Bei zusammengesetzter Filmspule 1 und eingeschwenkter Halte- und Klemmvorichtung 2 liegt die Reibfläche 71 fest an der Innenseite der zusätzlichen Bundscheibe 3 an, sodass die zusätzliche Bundscheibe 3 nur unter Überwindung eines grossen Reibungswiderstands gegenüber der kleineren Bundscheibe verdrehbar ist. Im ausgeschwenkten Zustand der Halte- und Klemmvorrichtung 2 weist die zusätzliche Bundscheibe 3 gegenüber dem Lagerteil 7 mit der Reibfläche 71 einen kleinen axialen Abstand auf. Dadurch sind die Reibfläche 71 und die Innenseite der zusätzlichen Bundscheibe im wesentlichen ausser Eingriff, und die zusätzliche Bundscheibe 3 ist leicht gegenüber der kleineren innen angeordneten Bundscheibe 5 verdrehbar.

An der zusätzlichen Bundscheibe 3 kann noch, wie aus Fig. 3 ersichtlich, eine Aufnahmeeinrichtung 9 vorgesehen sein, welche es ermöglicht, die Filmrolle 1 mittels speziell ausgebildeter Manipulatoren zu greifen. Beispielsweise ist diese Aufnahmeeinrichtung 9 ein etwa 5 mm vorstehendes zylindrisches Teil, welches einen Bohrungsdurchmesser aufweist, der gleich oder grösser dem Bohrungsdurchmesser 4 des Wickelkerns ist.

Bei der erfindungsgemäss ausgebildeten Filmspule 1 ist das Ende des bandförmigen Filmmaterials F von den Klemmelementen 23,24 der Halte- und Klemmvorrichtung 2 gehalten. Dadurch ist gewährleistet, dass der Filmwickel fest auf den Spulenkern gewickelt bleibt.Während der Manipulation der Filmspule 1 können sich keine Filmmaterialschlaufen von der Spule abwickeln, welche dann mit dem Boden Berührung erlangen könnten und auf diese Weise Verunreinigungen aufnehmen könnten, die in weiterer Folge die Transportmittel in der jeweiligen Bearbeitungsstation verschmutzen könnten. Auch wird auf diese Weise vermieden, dass das herabhängende Ende des Filmmaterials gegebenenfalls eingeklemmt und verformt wird, was in weiterer Folge das Einfädeln des Filmbandes in die jeweilige Bearbeitungsstation erschweren könnte.

Die erfindungsgemässe Filmspule 1 kann manuell transportiert werden und in der Abwickel- oder in der Aufwickelstation der jeweiligen Bearbeitungsstation auf einen motorisch antreibbaren Wickeldorn aufgesteckt werden. Die Laschenteile 21,22 der Halte- und Klemmvorrichtung 2 mit den Klemmelementen 23,24 können von Hand aus- bzw. eingeschwenkt werden, um das Abwickeln oder das Aufwickeln des Filmbandes vorzubereiten. Der besondere Vorteil der erfindungsgemässen Filmspule 1 liegt aber vor allem auch darin, dass sie für den Einsatz in automatisierten und vollautomatischen Verarbeitungsanlagen vorbereitet ist. In derartigen Verarbeitungsanlagen ist der Bedienungsaufwand des Bedienungspersonals reduziert. In einer ersten Automatisierungsstufe wird das Filmband dabei eingangs der Bearbeitungsstationen automatisch an der Filmspule ergriffen und eingefädelt und abgewickelt oder automatisch auf dem Wickelkern gefangen und aufgewickelt. Bei weiter fortgeschrittenem Automatisierungsgrad der fotografischen Verarbeitungsanlage werden die Filmspulen 1 zusätzlich zwischen den einzelnen Bearbeitungsstationen automatisch transportiert und in den Abwickel- bzw. Aufwickelvorrichtungen auf Wickeldorne gesteckt. Die erfindungsgemässe Filmspule 1 ist für den Einsatz bei beiden Automatisierungsstufen geeignet, da die Halte- und Klemmvorrichtung an der Filmspule auch automatisch verschwenkbar ist. Die dazu in den Abwickel- bzw. Aufwickelvorrichtungen erforderlichen Betätigungsvorrichtungen werden im folgenden näher beschrieben.

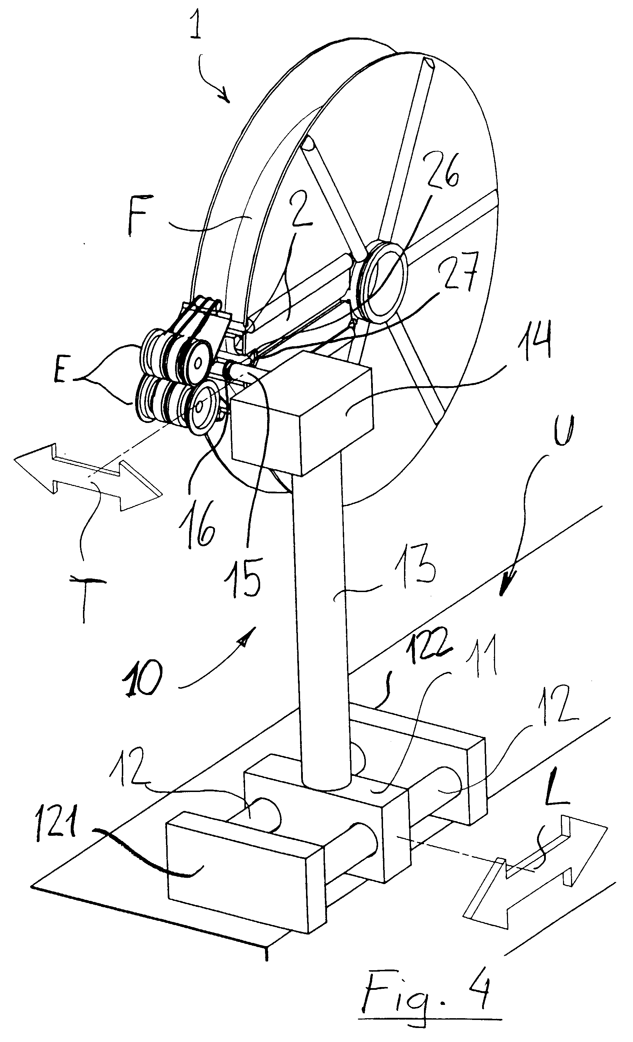

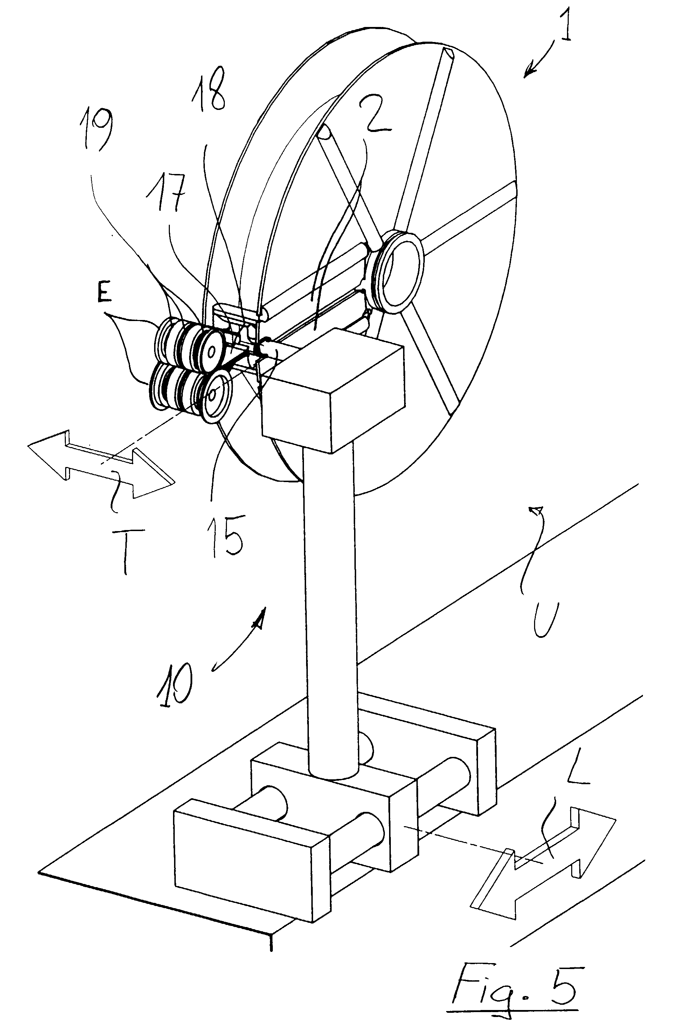

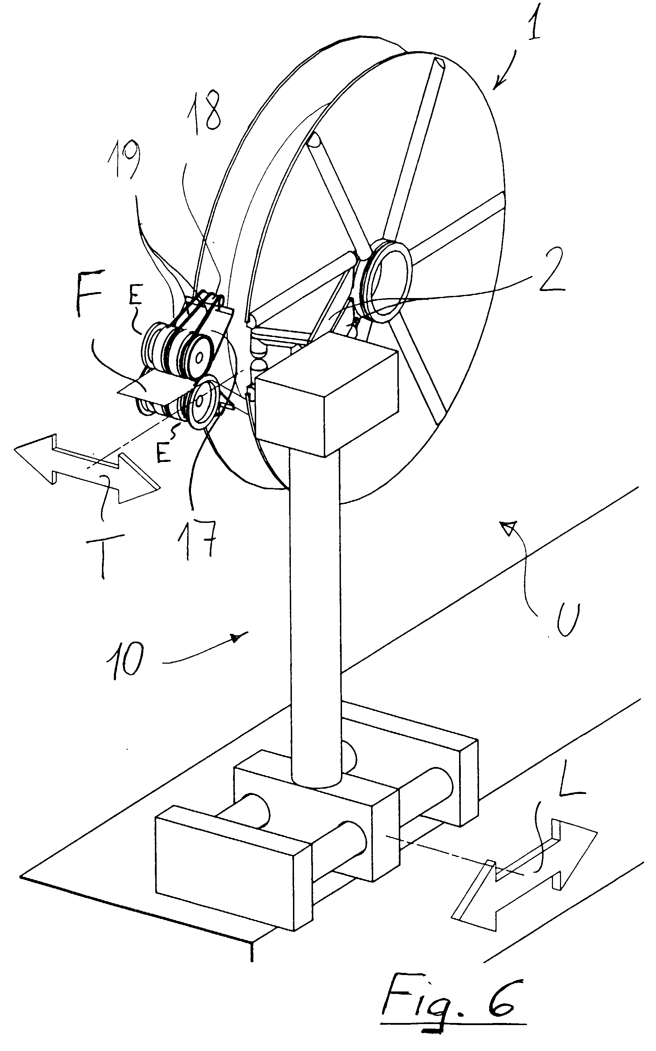

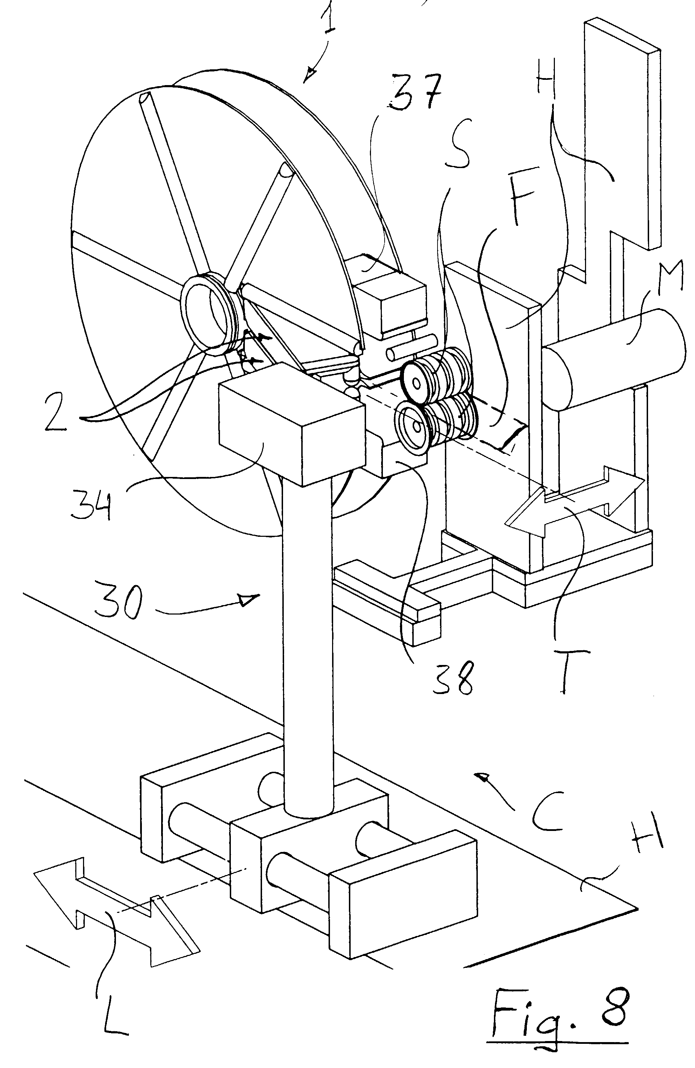

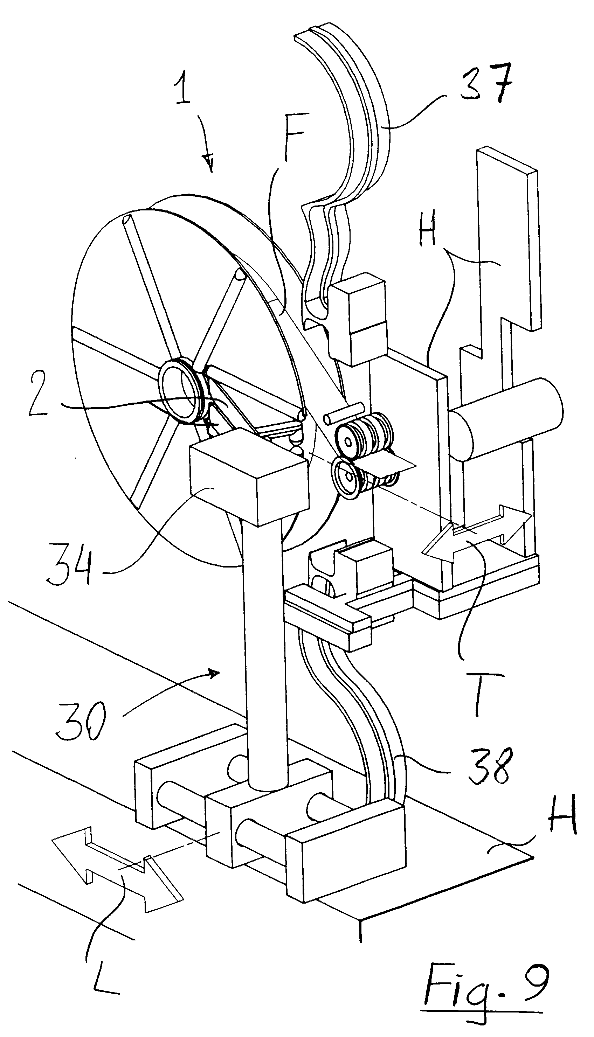

In den Fig. 4-9 ist jeweils eine erfindungsgemässe Filmspule 1 in einer Abwickeleinrichtung U bzw. in einer Aufwickeleinrichtung C in verschiedenen Stadien des Zusammenwirkens mit erfindungsgemässen Betätigungsvorrichtungen 10 bzw. 30 für die Halte- und Klemmvorrichtungen 2 dargestellt. Derartige Abwickeleinrichtungen für die erfindungsgemässen Filmspulen 1 können eingangs des fotografischen Kopiergeräts oder auch eingangs der Schneide- und Verpackungsstation vorgesehen sein. Die entsprechenden Aufwickeleinrichtungen für die erfindungsgemässen Filmspulen 1 können ausgangs des Filmprozessors oder auch ausgangs des fotografischen Printers angeordnet sein.

In den Fig. 4-6 ist eine eingangs der entsprechenden Bearbeitungsstationen angeordnete Abwickeleinrichtung U mit der erfindungsgemässen Betätigungsvorrichtung 10 und einer erfindungsgemässen Filmspule 1 dargestellt. Die Betätigungsvorrichtung 10 umfasst einen Schlitten 11, der entlang zweier Führungsstangen 12 in bzw. entgegen der allgemeinen Transportrichtung des Filmbandes F in der jeweiligen Bearbeitungsstation verschiebbar ist, wie in den Fig. jeweils durch den Doppelpfeil L angedeutet. Die Führungsstangen sind zwischen zwei Seitenteilen 121,122 eingespannt, die fest mit einem Gehäuse der Bearbeitungsstation verbunden sind. Die longitudinale Verschiebung des Schlittens erfolgt mittels nicht näher dargestellter Antriebsmittel, beispielsweise über einen Spindeltrieb.

Von dem Schlitten 11 erstreckt sich ein Holm 13 etwa vertikal nach oben, bis etwa auf die Höhe eines Wickeldorns, der in der Abwickeleinrichtung U vorgesehen ist, und auf den die erfindungsgemässe Filmspule 1 aufgesteckt ist. Am oberen Ende des Holms 13 ist ein Kopfstück 14 angeordnet, welches eine Einrichtung zum Verschwenken der Halte- und Klemmvorrichtung 2 an der Filmspule 1, insbesondere der Laschenteile 26,27 aufweist. Die Einrichtung zum Verschwenken umfasst einen Bolzen 15 oder ein ähnliches Element, der von einem im Kopfstück 14 angeordneten Aktuator, beispielsweise einer Pneumatikeinrichtung oder einem Spindeltrieb, quer zur Transportrichtung des Bandmaterials F auf die zusätzliche Bundscheibe 3 hin und in entgegengesetzte Richtung bewegbar ist, wie jeweils durch den Doppelpfeil T angedeutet.

Am Vorderende des Bolzens 15 ist eine Flachscheibe 16 angebracht, die in ihrer Stirnseite eine Nut aufweist. Dabei ist der Durchmesser der Flachscheibe 16 und die Breite der Nut derart gewählt, dass die Scheibe 16 in die Aussparungen 26,27 an den Vorderenden der Laschenteile 21,22 einschiebbar ist. Durch das Einschieben der Flachscheibe 16 in die Aussparungen 26,27 werden die Laschenteile 21,22 vertikal auseinandergepresst, und die Klemmelemente 23,24 ein kleines Stück voneinander entfernt, sodass entweder das geklemmte Bandende freigegeben wird oder ein Bandende zwischen die Klemmelemente eingeschoben werden kann.

Die Vorderenden der Laschenteile 21,22 gleiten in die stirnseitige Nut der Flachscheibe 16. Auf diese Weise bilden die Seitenwände der Nut beim Querverschieben des Bolzens 15 ein Widerlager für die Laschenteile 21,22, die auf diese Weise automatisch ein- bzw. ausschwenkbar sind. Auf diese Weise ausgebildet, dient der Bolzen 15 mit der Flachscheibe 16 sowohl zum Auseinanderspreizen der Klemmelemente 23,24 als auch zum automatischen Aus- bzw. Einschwenken der Laschenteile 21,22.

Zum Fangen des von den Klemmelementen 23,24 freigegebenen Endes des Filmbandes F ist die abwickelseitige Betätigungsvorrichtung 10 mit Fangmitteln ausgestattet, die das Bandende einer an der Bearbeitungsstation vorgesehenen Einfädeleinrichtung zuführen, sobald es von der Halte- und Klemmvorrichtung 2 freigegeben ist. Gemäss dem dargestellten Ausführungsbeispiel umfassen die Fangmittel zwei schwenkbare Führungsklappen 17 mit je einer drehbaren Walze 18 an ihren Vorderenden und mit mehreren, gemäss dem vorliegenden Beispiel drei, umlaufenden Führungsbändern 19 die einerseits über die zugehörigen Walzen eines Einzugswalzenpaars E der jeweiligen Bearbeitungsstation und andererseits über die Walzen 18 an den Vorderenden der Führungsklappen 17 laufen. Die Führungsbänder 19 sind auf diese Weise mit den Walzen des Einzugswalzenpaars E gekoppelt und zusammen mit diesem in Abwickelrichtung drehbar.

Zum Abspulen einer gefüllten Filmspule 1 in der Abwickeleinrichtung U eingangs einer Bearbeitungsstation wird zunächst durch axiales Drehen der auf den Wickeldorn gesteckten Filmspule 1 die Position der Halte- und Klemmvorrichtung 2 derart eingestellt, dass das vorstehende geklemmte Ende des Filmbandes F etwa auf der Höhe der Berührungsebene der beiden Walzen des Einzugswalzenpaars E angeordnet ist. Dies erfolgt mit Hilfe von (nicht dargestellten) Sensoren, die es erlauben, die Position der Halte- und Klemmvorrichtung 2 bzw. des Filmvorderendes F festzustellen. Sodann werden die beiden Führungsklappen 17 mit den umlaufenden Führungsbändern 19 eingeschwenkt, so dass sich das Filmvorderende F in einem Führungsspalt zwischen den beiden Führungsklappen 17 befindet und zwischen den Führungsbändern der oberen und der unteren Führungsklappe gehalten ist.

Die Betätigungsvorrichtung 10 für die Halte- und Klemmvorrichtung 2 wird aktiviert, indem der Schlitten 11 entlang der Führungsstangen 12 auf die Filmspule 1 hin nach hinten verschoben wird. Dabei wird der Bolzen 15 mit der Flachscheibe 16 zwischen die Aussparungen 26,27 der Laschenteile 21,22 geschoben und presst die Laschenteile 21,22 vertikal derart auseinander, dass die Klemmelemente 23,24 das Ende des Filmbandes F freigeben. Die Vorderenden der Laschenteile 21,22 gleiten in die Nut in der Flachscheibe 16; auf diese Weise können die Laschenteile 21,22 durch Zurückziehen des Bolzens 15 in das Kopfteil 14 automatisch aus der ersten stabilen eingeschwenkten Lage in die zweite geöffnete Lage geschwenkt werden. Nach dem Ausschwenken der Laschenteile 21,22 wird die Betätigungsvorrichtung üblicherweise wieder derart aktiviert, dass sie wieder ausser Eingriff mit der Halte- und Klemmvorrichtung 2 gebracht wird. Dazu wird einfach der Schlitten 11 in Transportrichtung des Bandmaterials verschoben.

Wenn die Laschenteile 21,22 mit den Klemmelementen 23,24 ausgeschwenkt sind, wird das freie Ende des Filmbandes F (bzw. eines angespleissten Leaderbandes) mit Hilfe der Führungsbänder 19 bis zu dem Einzugswalzenpaar E transportiert. Sobald die Einzugswalzen E das Bandende gefasst haben, werden die Führungsklappen 17 wieder aufgeschwenkt, um das Abwickeln der Filmspule 1 nicht zu behindern. Nach dem Abspulen der Filmspule F wird die Position der Halte- und Klemmvorrichtung 2 mittels Sensoren analog zu vorhin eingestellt, und die Betätigungsvorrichtung 10 wird erneut in Eingriff mit der Halte- und Klemmvorrichtung 2 gebracht, um diese durch Vorschieben des Bolzens 15 wieder zurückzuschwenken. Danach wird die Betätigungsvorrichtung 10 wieder in die ursprüngliche Position zurückbewegt, und eine neue Filmspule kann angesteckt werden.

Sollte die Betätigungsvorrichtung 10 während des Abwickelns in Eingriff mit der Halte- und Klemmvorrichtung 2 bleiben, so behindert auch dies das Abspulen der Filmspule F nur unwesentlich, da die zusätzliche Bundscheibe 3 im ausgeschwenkten Zustand der Halte- und Klemmvorrichtung 2 gegenüber der inneren kleineren Bundscheibe 5 und dem Wickelkern leicht verdrehbar ist. In diesem Fall entfällt das erneute Einstellen der Position der Halte- und Klemmmittel 2 und diese können direkt zurückgeschwenkt werden.

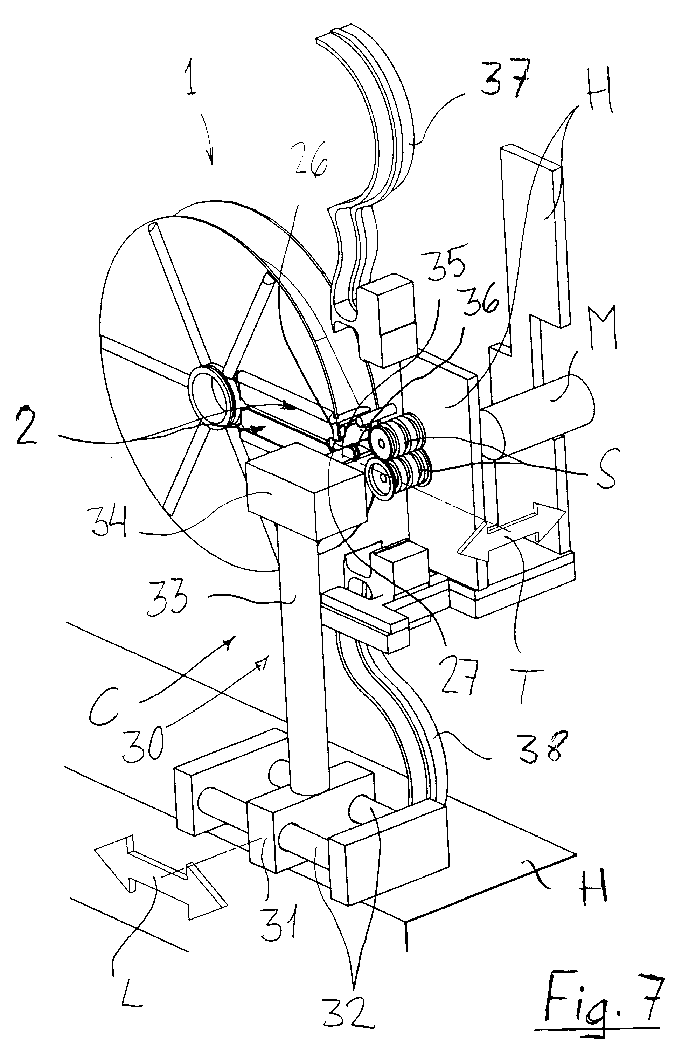

In Fig. 7-9 ist eine ausgangs der entsprechenden Bearbeitungsstation angeordnete Aufwickeleinrichtung C dargestellt. Die Betätigungsvorrichtung für die Halte- und Klemmvorrichtung an der auf den Wickeldorn gesteckten Filmspule 1 ist gesamthaft mit dem Bezugszeichen 30 bezeichnet. Wie die eingangsseitige Betätigungsvorrichtung 10 umfasst sich gleichfalls einen Schlitten 31, der entlang von Führungsstangen 32 gemäss dem Doppelpfeil L in bzw. entgegen der allgemeinen Transportrichtung des Bandmaterials in der Bearbeitungsstation verschiebbar ist. Vom Führungsschlitten erstreckt sich ein Holm 33 etwa vertikal nach oben und reicht bis etwa zur Höhe des Wickeldorns in der Aufwickeleinrichtung C. Am oberen Ende des Holmes 33 ist gleichfalls ein Kopfteil 14 angebracht, welches einen Aktuator aufnimmt, mit dessen Hilfe ein Bolzen 35 quer zu der Transportrichtung des Bandmaterials auf Filmspule 1 hin vorschieb- bzw. zurückziehbar ist, wie durch den Doppelpfeil T angedeutet ist. Das vordere Ende des Bolzens 35 weist eine Flachscheibe 36 mit einer Nut auf. Der Durchmesser der Flachscheibe 36 und die Breite der Nut sind derart bemessen, dass sie in die Aussparungen 26,27 an den Vorderenden der Laschenteile 21,22 der Halte- und Klemmvorrichtung 2 einschiebbar ist und auf diese Weise die Klemmelemente 23,24 aufspreizt, und dass die Vorderenden der Laschenteile 21,22 in die Nut gleiten können.

Um zu gewährleisten, dass das aus der Bearbeitungsstation ausgestossene Filmmaterialende F auch sicher auf dem Wickelkern der ausgangsseitig angesteckten Filmspule 1 gefasst wird, sind in der Aufwickelvorrichtung C zwei einschwenkbare löffelartig geformte Führungsarme 37,38 angebracht, welche das vorlaufende Bandende auf den Wickelkern hin und um ihn herum leiten. Die löffelartigen Führungsarme 37,38 sind oberhalb und unterhalb der Berührungsebene der Walzen eines von einem Motor M angetriebenen Ausgabewalzenpaars S am aufwickelseitigen Gehäuseteil H der Bearbeitungsstation angelenkt. Sie werden derart auf die Filmspule 1 hin eingeschwenkt, dass ihre vorderen Bereiche den Wickelkern der Filmspule umgreifen. Auf diese Weise wird ein Kanal für das von dem Ausgabewalzenpaar S ausgestossene vorlaufende Ende des Bandmaterials F geschaffen, der sich vom Ausgabewalzenpaar S bis zum Wickelkern der leeren Filmspule 1 erstreckt. Sobald das Filmmaterial auf dem Wickelkern der Filmspule 1 gefangen ist, werden die Führungsarme 37,38 wieder zurückgeschwenkt.

Das vorlaufende Ende des bandförmigen Filmmaterials F wird in der Bearbeitungsstation zum Ausgabewalzenpaar S transportiert. Bevor es von diesem ausgestossen und in Richtung der Filmspule 1 weitertransportiert wird, werden die beiden Führungsarme 37,38 eingeschwenkt. Diese bilden einen Kanal, der vom Ausgabewalzenpaar S bis um den Wickelkern der Filmspule 1 reicht. Etwa gleichzeitig mit dem Einschwenken der löffelartigen Führungsarme 37,38 werden die Betätigungsmittel 30 für die Halte- und Klemmvorrichtung an der Filmspule aktiviert. Dazu wird der Schlitten 31 entlang der Führungsstangen 32 auf die Filmspule 1 zu bewegt. Die Filmspule 1 wurde zuvor durch Rotation derart justiert, dass die Halte- und Klemmvorrichtung 2 etwa auf der Höhe der Berührungsebene der beiden Walzen des Ausgabewalzenpaars S liegt. Zur Erkennung der Stellung der Halte- und Klemmeinrichtung sind ausgabeseitig Sensoren angeordnet. Der Bolzen 25 dringt in die Ausnehmungen 26,27 an den Vorderenden der Laschenteile 21,22, und die Laschenteile gleiten in die Nut der auf dem Bolzen 35 angeordneten Flachscheibe 36. Durch Zurückziehen des Bolzens 35 werden die Laschenteile 21,22 mit den Klemmelementen 23,24 ausgeschwenkt. Daraufhin kann die Betätigungsvorrichtung 30 wieder ausser Eingriff mit der Halte- und Klemmvorrichtung 2 gebracht werden. Aber selbst wenn die Betätigungsvorrichtung 30 in Eingriff mit der Halte- und Klemmvorrichtung 30 verbleibt behindert dies den Aufwickelvorgang des Filmbandes nur unwesentlich, da die zusätzliche Bundscheibe 3 in geöffnetem Zustand der Halte- und Klemmvorrichtung 2 sehr leicht gegenüber der inneren kleineren Bundscheibe verdrehbar ist. Das heisst, obwohl die zusätzliche Bundscheibe 3 nicht verdrehbar ist, kann der Rest der Spule leicht gedreht werden.

Die Halte- und Klemmvorrichtung 2 verbleibt sodann in dieser geöffneten Stellung bis zum bevorstehenden Ende des Aufwickelvorgangs. Dies kann durch einen Sensor festgestellt werden, der vor dem Ausgabewalzenpaar S in der Bearbeitungsstation angeordnet ist. Dieser detektiert ein üblicherweise angespleisstes Leaderband und generiert ein Signal, auf das hin zunächst erforderlichenfalls (falls die Betätigungsvorrichtung ausser Eingriff gebracht worden ist) die Filmspule solang weitergedreht wird, bis die Halte- und Klemmvorrichtung 2 wieder etwa auf der Höhe der Berührungsebene der Walzen des Ausgabewalzenpaars S angeordnet ist. Dann wird die Betätigungsvorrichtung 30 erneut aktiviert wird. Nachdem sie erforderlichenfalls wiederum in Eingriff mit der Halte- und Klemmvorrichtung 2 gebracht worden ist, (falls sie ausser Eingriff mit der Halte- und Klemmvorrichtung war) wird der Bolzen 35 wieder aus dem Kopfteil 34 herausgeschoben und dadurch die Halte- und Klemmvorrichtung wieder geschlossen, wobei die Klemmelemente 23.24 oberhalb und unterhalb des Filmstreifens F zu liegen kommen. Nach dem Schliessen der Halte- und Klemmvorrichtung 2 wird die Spule 1 noch solange weitergedreht, bis das Leaderbandende etwa 5 mm bis 10 mm von den Klemmelementen 23,24 entfernt ist. Dies ist möglich, da selbst im eingeschwenkten Zustand die zusätzliche Bundscheibe 3 zwar gegen einen grossen Reibungswiderstand doch langsam gegenüber dem Rest der Spule verdrehbar ist. Durch Wegbewegen des Schlittens 31 von der Filmspule 1 wird der Bolzen wieder aus den Aussparungen 26,27 der Laschenteile 21,22 herausbewegt, und die Klemmelemente 23,24 werden wieder zusammengepresst. Auf diese Weise ist das Ende des Filmbandes F bzw. eines angespleissten Leaderbandes fest gehalten und geklemmt, sodass bei der weiteren Manipulation der Filmspule 1 sich der Wickel nicht lösen und keine Schleife herabfallen kann. Danach kann die Filmspule 1 bequem manuell oder automatisch gewechselt werden und gegebenenfalls eingangs der nächsten Bearbeitungsstation angesteckt werden.

Die erfindungsgemässe Vorrichtung wurde am Beispiel einer Filmspule erläutert. Wie bereits eingangs der Figurenbeschreibung erwähnt ist das erfindungsgemässe Prinzip selbstverständlich auch auf in Kassetten angeordnetes bandförmiges fotografisches Material anwendbar. Dabei kann es sich um Film- oder auch um Papierkassetten handeln. Die erfindungsgemässe Vorrichtung ist sowohl für den manuellen als auch für den mehr oder weniger vollautomatischen Betrieb einer fotografischen Verarbeitungsanlage geeignet. Die Enden des aufgewickelten bandförmigen fotografischen Materials sind von der Halte- und Klemmvorrichtung sicher festgeklemmt. Die Halte- und Klemmvorrichtung ist sowohl manuell als auch vollautomatisch von eingangs bzw. ausgangs der Bearbeitungsstationen angeordneten Betätigungsvorrichtungen öffnen- bzw. schliessbar. Daher kann die erfindungsgemässe Vorrichtung sowohl in bereits bestehenden Bearbeitungsstationen mit manuellem Spulen- bzw. Kassettenwechsel eingesetzt werden, als auch in teilweise oder zur Gänze automatisierten Verarbeitungsanlagen mit automatischem Spulen- bzw. Kassettenwechsel und gegebenenfalls sogar Spulen- bzw. Kassettentransport zwischen den einzelnen Bearbeitungsstationen.

## Patentansprüche

1. Wickelspule (1) für fotografisches Bandmaterial
mit einem Wickelkern (4), auf den fotografisches Bandmaterial aufwickelbar ist, wobei die Wickelspule abwickel- oder aufwickelseitig in Bearbeitungsstationen einer fotografischen Verarbeitungsanlage ansteck- bzw. anstellbar ist,
und mit einer Halte- und Klemmvorrichtung (2), die an der drehbaren Wickelspule angebracht ist, dadurch gekennzeichnet, daß die Halte- und Klemmvorrichtung (2) derart angeordnet ist, daß sie lösbar das ablaufende Ende des Bandmaterials zwischen Klemmelementen (23, 24) klemmt und hält.

2. Wickelspule nach Anspruch 1, dadurch gekennzeichnet, daß die Halte- und Klemmvorrichtung an der Wickelspule ausschwenkbar angebracht ist.

3. Wickelspule nach Anspruch 1 oder 2, dadurch gekennzeichnet, daß die Halte- und Klemmvorrichtung (2) eine bewegliche Lasche (21, 22) mit daran angeordneten Klemmelementen (23, 24) umfaßt, welche Lasche (21, 22) aus einer ersten stabilen Endstellung, in der das Bandmaterialende zwischen den Klemmelementen (23, 24) geklemmt und gehalten ist, in eine zweite stabile Endstellung schwenkbar ist, in der die Klemmelemente (23, 24) außer Eingriff mit dem Bandmaterialende sind.

4. Wickelspule nach Anspruch 3, dadurch gekennzeichnet, daß die Lasche (21, 22) in einer vertikalen Seitenwand (3) der Bandmaterialkassette (1) vorgesehen und integriert ist, und daß die Klemmelemente (23, 24) an deren Vorderende im Bereich der Peripherie der Seitenwand (3) angeordnet sind und etwa quer zu der Seitenwand (3) und zu der Oberfläche des Bandmaterials (F) verlaufen.

5. Wickelspule nach Anspruch 3 oder 4, dadurch gekennzeichnet, daß die Lasche zweiteilig ist und ein oberes und ein unteres Laschenteil (21 bzw. 22) umfaßt, daß die Klemmelemente (23, 24), beispielsweise eine Klemmleiste oder ein bzw. mehrere Klemmfinger, jeweils am Vorderende der Laschenteile (21, 22) angeordnet sind, und daß an den Vorderenden der Laschenteile (21, 22) einander gegenüberliegende Aussparungen (26, 27) vorgesehen sind.

6. Wickelspule nach einem der Ansprüche 1 bis 5, dadurch gekennzeichnet, daß die Halte- und Klemmvorrichtung (2) in einer zusätzlichen Seitenwand (3) der Bandmaterialkassette (1) vorgesehen ist, welche derart mit dem Spulenkern verbunden ist, daß sie in geöffnetem Zustand der Halte- und Klemmvorrichtung (2) radial leicht gegenüber dem Wickelkern verdrehbar ist, während sie in eingeschwenktem Zustand der Halte- und Klemmvorrichtung (2) nur schwer verdrehbar ist.

7. Wickelsystem
mit mindestens einer Wickelspule nach einem der Ansprüche 1 bis 6 und mit mindestens einer automatischen Betätigungsvorrichtung, die die Halte- und Klemmvorrichtung zum Lösen oder Halten des Bandmaterials betätigt.

8. System nach Anspruch 7, dadurch gekennzeichnet, daß die mindestens eine automatische Betätigungsvorrichtung (10, 30) für die Halte- und Klemmvorrichtung (2) an der Wickelspule (1) abwickel- oder aufwickelseitig an einer oder mehreren einzelnen Bearbeitungsstationen vorgesehen ist und derart ausgebildet ist, daß sie mit der Halte- und Klemmvorrichtung (2) in Eingriff bringbar ist, um sie zu öffnen und das Ende des fotografischen Bandmaterials (F) zu fassen oder diese zu schliessen, sodaß das Bandmaterialende eingeklemmt und gehalten vorliegt.

9. System nach Anspruch 8, dadurch gekennzeichnet, daß die mindestens eine abwickel- oder aufwickelseitig der einen oder mehreren einzelnen Bearbeitungsstationen vorgesehene automatische Betätigungsvorrichtung (10, 30) für die Halte- und Klemmvorrichtung (2) in bzw. entgegen der allgemeinen Transportrichtung des Bandmaterials (F) in der jeweiligen Bearbeitungsstation verschiebbar ist.

10. System nach Anspruch 9, dadurch gekennzeichnet, daß jede automatische Betätigungsvorrichtung (10, 30) einen Schlitten (11, 31) umfaßt, der entlang einer oder mehrerer Führungsstangen (12, 32) längsverschiebbar ist, sowie einen sich vom Schlitten (11, 31) im wesentlichen vertikal erstreckenden Holm (13, 33), an dessen oberen Ende ein Kopfstück (14, 34), mit der Einrichtung (15, 35) zum Verschwenken der Laschenteile (21, 22) angeordnet ist, welche zugleich zum Aufspreizen der Klemmelemente (23, 24) ausgebildet ist und einen Bolzen oder ein ähnliches Element umfaßt, der von einem Aktuator quer zur Transportrichtung des Bandmaterials (F) auf die Seitenwand (3) hin und in entgegengesetzte Richtung bewegbar ist.

11. System nach Anspruch 10, dadurch gekennzeichnet, daß am Vorderende des Bolzens (15, 35) eine Flachscheibe (16, 36) angeordnet ist, die in der Stirnseite eine Nut aufweist, und daß der Durchmesser der Scheibe sowie die Breite der Nut derart gewählt sind, daß die Flachscheibe (16, 36) in die Aussparungen (26, 27) an den Vorderenden der Laschenteile (21, 22) einschiebbar ist, wobei die Laschenteile (21, 22) einerseits vertikal auseinandergepreßt werden, und andererseits durch Querbewegen des Bolzens (15, 35) verschwenkbar sind.

12. System nach einem der Ansprüche 8 bis 10, dadurch gekennzeichnet, daß eine abwickelseitige automatische Betätigungsvorrichtung (10) Fangmittel für das freie Ende des Materialbandes (F) aufweist, die das Bandende einer an der Bearbeitungsstation vorgesehenen Einfädeleinrichtung zuführen, sobald es von der Halte- und Klemmvorrichtung (2) freigegeben ist.

13. System nach Anspruch 12, dadurch gekennzeichnet, daß die Fangmittel zwei Führungsklappen (17) mit einem oder mehreren umlaufenden Führungsbändern (19) sind, die mit einem Einzugswalzenpaar (E) der jeweiligen Bearbeitungsstation gekoppelt sind und zusammen mit diesem in Abwickelrichtung drehbar sind.

14. System nach einem der Ansprüche 8 bis 13, dadurch gekennzeichnet, daß eine aufwickelseitige Betätigungsvorrichtung (30) eine Zuführeinrichtung aufweist, mit der das vorlaufende Ende des Materialbandes (F) zu dem Wickelkern der Bandmaterialkassette (1) leitbar ist, um dort gefangen zu werden.

15. System nach Anspruch 14, dadurch gekennzeichnet, daß die Zuführeinrichtung zwei einschwenkbare löffelartige Führungsarme (37, 38) umfaßt, die im eingeschwenkten Zustand den Wickelkern umgreifen und einen engen Führungskanal für das vorlaufende Ende des Materialbandes (F) bilden, der von einem Transportwalzenpaar (S) ausgangs der jeweiligen Bearbeitungsstation bis zum Wickelkern reicht.

16. System nach einem der Ansprüche 8 bis 15, dadurch gekennzeichnet, daß abwickel- und aufwickelseitig ein oder mehrere Sensoren vorgesehen sind, mit denen einerseits die Lage der Halte- und Klemmvorrichtung (2) detektierbar ist und in Abhängigkeit von der detektierten Lage ein Antrieb für den Wickelkern aktivierbar ist, um die Halte- und Klemmvorrichtung (2) in die richtige Position zu bewegen, und mit denen andererseits die vorlaufenden oder die nachlaufenden Endstücke des Materialbands (F) feststellbar sind, um im geeigneten Augenblick die jeweilige automatische Betätigungsvorrichtung (10, 30) zu aktivieren.

17. Fotomaterialverarbeitungssystem mit einem Wickelsystem nach einem der Ansprüche 7 bis 16 und einem fotografischen Kopiergerät oder einer Schneide- und Verpackungsstation, dadurch gekennzeichnet, daß eine abwickelseitige automatische Betätigungsvorrichtung (10) an einem fotografischen Kopiergerät oder einer Schneide- und Verpackungsstation angeordnet ist, und daß eine aufwickelseitige automatische Betätigungsvorrichtung (3) ausgangs eines Filmprozessors, an einem fotografischen Kopiergerät oder ausgangs eines Papierprozessors angeordnet ist.

## Claims

1. Winding spool (1) for photographic strip material, having a winding core (4) on which the photographic strip material can be wound, it being possible to push on or place on the winding spool at the unwinding or winding end in processing stations of a photographic processing installation, and having a holding and clamping appliance (2), which is applied to the rotatable winding spool, characterised in that the holding and clamping appliance (2) is arranged in such a way that it releasably clamps and holds the run-off end of the strip material between clamping elements (23, 24).

2. Winding spool according to Claim 1, characterised in that the holding and clamping appliance is attached to the winding spool so that it can be pivoted out.

3. Winding spool according to Claim 1 or 2, characterised in that the holding and clamping appliance (2) comprises a movable strap (21, 22) with clamping elements (23, 24) arranged on it, which strap (21, 22) can be pivoted out of a first stable end position, in which the end of the strip material is clamped and held between the clamping elements (23, 24), into a second stable end position, in which the clamping elements (23, 24) are out of engagement with the end of the strip material.

4. Winding spool according to Claim 3, characterised in that the strap (21, 22) is provided in and integrated into a vertical side wall (3) of the strip material cassette (1), and in that the clamping elements (23, 24) are arranged at their front end in the region of the periphery of the side wall (3) and extend approximately transverse to the side wall (3) and to the surface of the strip material (F).

5. Winding spool according to Claim 3 or 4, characterised in that the strap is in two parts and comprises an upper and a lower strap part (21 and 22), in that the clamping elements (23, 24), for example a clamping strip or one or a plurality of clamping fingers, are respectively arranged at the front end of the strap parts (21, 22), and in that recesses (26, 27) are provided opposite to one another at the front ends of the strap parts (21, 22).

6. Winding spool according to one of Claims 1 to 5, characterised in that the holding and clamping appliance (2) is provided in an additional side wall (3) of the strip material cassette (1), which is connected to the spool core in such a way that it can be slightly rotated radially relative to the spool core in the open condition of the holding and clamping appliance (2) whereas it can only be rotated with difficulty when the holding and clamping appliance (2) is in the condition where it is pivoted in.

7. Winding system having at least one winding spool according to one of Claims 1 to 6 and having at least one automatic actuation appliance which actuates the holding and clamping appliance to release or hold the strip material.

8. System according to Claim 7, characterised in that the at least one automatic actuation appliance (10, 30) for the holding and clamping appliance (2) is provided on the winding spool (1) on the winding or unwinding end of one or a plurality of processing stations and is configured in such a way that it can be brought into engagement with the holding and clamping appliance (2) in order to open it and to contain the end of the photographic strip material (F) or to close the holding and clamping appliance (2) so that the end of the strip material is available in such a way that it is clamped in and held.

9. System according to Claim 8, characterised in that the at least one automatic actuation appliance (10, 30) for the holding and clamping appliance (2) provided at the unwinding or winding end of the one or a plurality of individual processing stations can be displaced in or against the general transport direction of the strip material (F) in the respective processing station.

10. System according to Claim 9, characterised in that each automatic actuation appliance (10, 30) comprises a slide (11, 31), which can be displaced longitudinally along one or a plurality of guide rods (12, 32), and a spar (13, 33) extending essentially vertically from the slide (11, 31), on the upper end of which spar (13, 33) is arranged a cap piece (14, 34) with the device (15, 35) for pivoting the strap parts (21, 22), which device (15, 35) is also configured for spreading out the clamping elements (23, 24) and comprises a pin or a similar element which can be moved by an actuator transverse to the transport direction of the strip material (F) towards the side wall (3) and in the opposite direction.

11. System according to Claim 10, characterised in that a flat disc (16, 36), which has a groove on its end surface, is arranged at the front end of the pin (15, 35), and in that the diameter of the disc and the width of the groove are selected in such a way that the flat disc (16, 36) can be pushed into the recesses (26, 27) on the front ends of the strap parts (21, 22), the strap parts (21, 22) being pressed vertically apart, on the one hand, and being pivotable, on the other hand, by transverse movements of the pin (15, 35).

12. System according to one of Claims 8 to 10, characterised in that an automatic actuation appliance (10) at the unwinding end has capture means for the free end of the material strip (F), which capture means feed the end of the strip to a threading device provided on the processing station as soon as the end of the strip is released by the holding and clamping appliance (2).

13. System according to Claim 12, characterised in that the capture means are two guide flaps (17) with one or a plurality of circulating guide tapes (19) which are connected to a pull-in roller pair (E) of the respective processing station and, together with the latter, can be rotated in the unwinding direction.

14. System according to one of Claims 8 to 13, characterised in that an unwinding-end actuation appliance (30) has a feed device by means of which the leading end of the material strip (F) can be guided to the spool core of the strip material cassette (1) so that it can be captured there.

15. System according to Claim 14, characterised in that the feed device comprises two spoon-type guide arms (37, 38), which can be pivoted in, which encompass the winding core in the pivoted-in condition and which form a narrow guide channel for the leading end of the material strip (F), which guide channel reaches as far as the spool core from a transport roller pair (S) at outlet from the respective processing station.

16. System according to one of Claims 8 to 15, characterised in that one or a plurality of sensors are provided at the unwinding and winding ends, by means of which sensors, on the one hand, the position of the holding and clamping appliance (2) can be detected and a drive for the winding core can be activated as a function of the position detected in order to move the holding and clamping appliance (2) into the correct position, and by means of which sensors, on the other hand, the leading or the trailing end pieces of the material strip (F) can be detected in order to activate the respective automatic actuation appliance (10, 30) at the appropriate moment.

17. Photographic material processing system having a winding system according to one of Claims 7 to 16 and a photographic copying unit or a cutting and packing station, characterised in that an unwinding-end automatic actuation appliance (10) is arranged on a photographic copying unit or a cutting and packing station, and in that a winding-end automatic actuation appliance (3) is arranged at outlet from a film processor, on a photographic copying unit or at outlet from a paper processor.

## Revendications

1. Bobine d'enroulement (1) pour matériau photographique en bande comportant un axe d'enroulement (4) sur lequel peut s'enrouler le matériau photographique en bande; dans le cas de laquelle la bobine d'enroulement peut s'enficher ou se placer du côté déroulement ou du côté enroulement dans des stations de traitement d'une installation de traitement photographique, et comportant, un dispositif de maintien et de bridage (2) rapporté sur la bobine d'enroulement rotative,
caractérisée par le fait que le dispositif de maintien et de bridage (2) est disposé de façon à brider et maintenir, de façon amovible, entre des éléments de bridage (23, 24), l'extrémité du matériau en bande qui quitte la bobine en se déroulant.

2. Bobine d'enroulement selon la revendication 1, caractérisée par le fait que le dispositif de maintien et de bridage est rapporté sur la bobine d'enroulement avec possibilité de pivoter vers l'extérieur.

3. Bobine d'enroulement selon la revendication 1 ou 2, caractérisée par le fait que le dispositif de maintien et de bridage (2) comporte une languette mobile (21, 22) avec des éléments de bridage (23, 24) qui y sont disposés, languette (21, 22) qui peut pivoter entre une première position d'extrémité stable dans laquelle l'extrémité du matériau en bande est bridée et maintenue entre les éléments de bridage (23, 24) et une seconde position d'extrémité stable dans laquelle les éléments de bridage (23, 24) sont hors prise avec l'extrémité du matériau en bande.

4. Bobine d'enroulement selon la revendication 3, caractérisée par le fait que la languette (21, 22) est prévue et intégrée dans une paroi latérale verticale (3) de la cassette de matériau en bande (1) et que les éléments de bridage (23, 24) sont disposés à son extrémité avant, au voisinage de la périphérie de la paroi latérale (3), et sont orientés à peu près perpendiculairement à la paroi latérale (3) et à la surface du matériau en bande (F).

5. Bobine d'enroulement selon la revendication 3 ou 4, caractérisée par le fait que la languette (21, 22) est en deux parties et comporte une partie supérieure et une partie inférieure (21 ou 22) de la languette, que les éléments de bridage (23, 24), par exemple une baguette de bridage ou un ou plusieurs doigts de bridage sont disposés à l'extrémité avant de chacune des parties (21, 22) de la languette et qu'aux extrémités avant des parties (21, 22) de la languette sont prévus des évidements situés en face l'un de l'autre.

6. Bobine d'enroulement selon l'une des revendications 1 à 5, caractérisée par le fait que le dispositif de maintien et de bridage (2) est prévu dans une paroi latérale supplémentaire (3) de la cassette de matériau en bande (1), paroi qui est reliée à l'axe de la bobine de façon telle qu'à l'état ouvert du dispositif de maintien et de bridage (2) elle peut facilement tourner radialement par rapport à l'axe de la bobine tandis qu'à l'état de pivotement, vers l'intérieur, du dispositif de maintien et de bridage (2), elle ne peut tourner que difficilement.

7. Système d'enroulement comportant au moins une bobine d'enroulement selon l'une des revendications 1 à 6 et au moins un dispositif de manoeuvre automatique qui manoeuvre le dispositif de maintien et de bridage pour libérer ou maintenir le matériau en bande.

8. Système selon la revendication 7, caractérisé par le fait que le dispositif de manoeuvre automatique (10, 30), dont il y a au moins un, pour le dispositif de maintien et de bridage (2) qui se trouve sur la bobine d'enroulement (1), est prévu du côté déroulement et du côté enroulement sur une ou plusieurs des différentes stations de traitement et qu'il est conçu de façon à pouvoir venir en prise avec le dispositif de maintien et de bridage (2) pour l'ouvrir et saisir l'extrémité du matériau photographique en bande (F) ou le fermer de façon que l'extrémité du matériau en bande se présente bridée et maintenue.

9. Système selon la revendication 8, caractérisé par le fait que le dispositif de manoeuvre automatique (10, 30), qui est prévu du côté déroulement ou du côté enroulement d'une ou plusieurs des différentes stations de traitement, et dont il y a au moins un, pour le dispositif de maintien et de bridage (2), peut coulisser dans le sens général de transport du matériau en bande (F) dans la station de traitement en question ou à l'encontre de ce sens de transport.

10. Système selon la revendication 9, caractérisé par le fait que chaque dispositif de manoeuvre automatique (10, 30) comporte un chariot (11, 31) qui peut coulisser longitudinalement le long d'un ou plusieurs barreaux de guidage (12, 32) ainsi qu'un montant (13, 33) qui, depuis le chariot (11, 31), s'étend sensiblement verticalement et à l'extrémité supérieure duquel est disposée une tête (14, 34) qui comprend un mécanisme (15, 35) de pivotement des parties (21, 22) de la languette, qui est en même temps conçue pour écarter les éléments de bridage (23, 24), et contient une tige ou élément semblable qu'un actionneur peut mouvoir perpendiculairement à la direction de transport du matériau en bande (F) en direction de la paroi latérale (3) ou en direction opposée.

11. Système selon la revendication 10, caractérisé par le fait qu'à l'extrémité avant de la tige (15, 35) est disposée une rondelle plate (16, 36) qui présente dans sa face frontale une rainure, et que le diamètre de la rondelle ainsi que la largeur de la rainure sont choisies de façon que la rondelle plate (16, 36) puisse passer dans les évidements (26, 27) prévus aux extrémités avant des parties (21, 22) de la languette, les parties (21, 22) de la languette d'une part s'écartant verticalement l'une de l'autre et d'autre part pouvant pivoter sous l'action d'un mouvement transversal de la tige (15, 35).

12. Système selon l'une des revendications 8 à 10, caractérisé par le fait qu'un dispositif de manoeuvre automatique (10) situé du côté déroulement présente, pour l'extrémité libre du matériau en bande (F), des moyens de capture qui amènent l'extrémité de la bande à un mécanisme d'enfilage prévu à la station de traitement dès que cette extrémité est livrée par le dispositif de maintien et de bridage (2).

13. Système selon la revendication 13, caractérisé par le fait que les moyens de capture sont deux volets de guidage (17) comprenant une ou plusieurs courroies de guidage à mouvement tournant (19) qui sont couplées avec une paire de rouleaux d'entrée (E) de la station de traitement en question et peuvent tourner avec cette paire dans le sens du déroulement.

14. Système selon l'une des revendications 8 à 10, caractérisé par le fait qu'un dispositif de manoeuvre (30) situé du côté enroulement présente un dispositif d'introduction par lequel l'extrémité avant du matériau en bande (F) peut être guidée vers l'axe d'enroulement de la cassette de matériau en bande (1) pour y être captée.

15. Système selon la revendication 14, caractérisé par le fait que le système d'amenée comporte deux bras de guidage (37, 38), en forme de cuiller qui peuvent pivoter vers l'intérieur, qui, à l'état de pivotement vers l'intérieur, enserrent l'axe d'enroulement et forment pour l'extrémité avant du matériau en bande (F) un étroit canal de guidage qui va d'une paire de rouleaux de transport (S), disposée à la sortie de la station de traitement en question, à l'axe d'enroulement.

16. Système selon l'une des revendications 8 à 15, caractérisé par le fait que sont prévus, du côté déroulement et du côté enroulement, un ou plusieurs détecteurs à l'aide desquels d'une part peut être détectée la position du dispositif de maintien et de bridage (2) et peut être activé, en fonction de la position détectée, un mécanisme d'entraînement pour l'axe d'enroulement pour amener le dispositif de maintien et de bridage (2) en position correcte et à l'aide desquels d'autre part peuvent être déterminées les extrémités avant ou arrière du matériau en bande (F) pour, à l'instant approprié, activer le dispositif de manoeuvre automatique (10, 30).

17. Système de traitement d'un matériau photographique comportant un système d'enroulement conforme à l'une des revendications 7 à 16 et une tireuse photographique ou une station de coupe et d'emballage, caractérisé par le fait qu'un dispositif de manoeuvre automatique (10), situé du côté déroulement, est disposé près d'une tireuse photographique ou d'une station de coupe et d'emballage et qu'un dispositif de manoeuvre automatique (3), situé du côté enroulement, est disposé à la sortie d'un organe de traitement du film, près d'une tireuse photographique ou à la sortie d'un organe du traitement du papier.
